# EUROPEAN PATENT SPECIFICATION

(11) **EP 3 766 729 B1**
(45) Date of publication and mention of the grant of the patent: **28.01.2026**
(21) Application number: 19186398.4
(22) Date of filing: 15.07.2019
(51) Int. Cl.: B60M 1/20

(54) **CANTILEVER FOR HIGH-SPEED OVERHEAD CONTACT LINE FOR PANTOGRAPHS WITH DIFFFERENT WIDTHS**
AUSLEGER FÜR HOCHGESCHWINDIGKEITSOBERLEITUNG FÜR VERSCHIEDEN BREITE STROMABNEHMER
CONSOLE POUR LIGNE DE CONTACT AÉRIENNE À GRANDE VITESSE POUR PANTOGRAPHES DE LARGEUR DIFFÉRENTES

(43) Date of publication of application: 20.01.2021
(73) Proprietor: IP Engenharia, 1750-130 Lisboa (PT)
(72) Inventor: ANJOS, CARLOS VÍTOR MACIEIRA, 1750-130 LISBOA (PT); SANTOS, MARCO FILIPE DO CARMO PEREIRA, 1750-130 LISBOA (PT); CHAMBEL, CARLOS ALBERTO OURO, 1750-130 LISBOA (PT)
(74) Representative: do Nascimento Gomes, Rui

(56) References cited:
- EP-A1- 0 820 895
- CN-U- 201 520 227
- GB-A- 821 264
- GB-A- 933 972
- PT-B- 104 817
- UNGVARI S ET AL: "OBERLEITUNG SICAT R H 1.0 FUER DIE NEUBAUSTRECKE KOELN-RHEIN/MAIN", EB- ELEKTRISCHE BAHNEN, DIV-DEUTSCHER INDUSTRIEVERLAG, DE, vol. 96, no. 7, 1 July 1998 (1998-07-01), pages 236 - 242, XP000771289, ISSN: 0013-5437

## Description

### Scope of the invention

This invention pertains to a cantilever for the Overhead Contact Line (OCL) system. It delivers a more harmonious and stable dynamic response and also clear additional benefits in terms of the adjustment of the OCL, both in the installation phase and in the maintenance phase, and as regards the renewal/replacement with this new cantilever of existing cantilevers that are installed and in service, given its design optimisation in terms of the number and types of parts used. The cantilever has been designed to meet European interoperability requirements - Technical specifications for interoperability relating to the energy subsystem, dated 18 November 2014, (EU Regulation No. 1301/2014) - on the basis of an alternating current and a maximum reference speed of 300 km/h.

### Background art

There are many examples of high-speed catenaries.

High-speed railways are always built using alternating current (25 kV 50 HZ or 15 kV 16 2/3 Hz, in the case of Germany).

In Europe, only France, Germany and the United Kingdom used alternating current for conventional lines. Other countries, which used direct current for their conventional lines (Spain, Belgium, Holland and Italy), had to consider non-conventional cantilevers as their electric traction systems were different.

France and Germany adapted their conventional cantilevers for high speed, whilst the United Kingdom followed the French model (TGV North).

Whilst retaining the essential geometry of its cantilever, Germany began using aluminium alloy tubes (which it also started using on its conventional lines). France (and the United Kingdom), on the other hand, continued using seamless steel tubes, but with connecting parts made of copper alloy.

Spain, Belgium and Holland also started using aluminium alloy for their cantilevers.

Italy also opted for aluminium, but its cantilevers were of a specific format that was different from all the others.

Whilst the French and German cantilevers (in their ongoing development) retained the catenary wire attached to the cantilever at the point where the top anchor meets the cantilever tube, Belgium opted for an attachment that involved the catenary wire being hung from the top anchor away from the point at which this bar meets the cantilever tube. Spain took the same route, but with the catenary wire attached above the cantilever's top anchor.

In Belgium, all cantilever insulators are made of synthetic material but in Spain the top anchor insulator is made of glass and the cantilever tube insulator is made of solid core porcelain. Most insulators in France are made of glass but in Germany most insulators are solid core ceramic, although both countries make use of synthetic insulators in certain situations.

Portuguese patent application PT104817 discloses a cantilever solution for a catenary system, in which features such as a top anchor, a cantilever tube, a registration tube or a steady arm (4) are provided. Such consists of a suitable solution for Overhead Contact Line systems, although not being particularly fit for multi-pantograph solutions since, by resorting to a straight steady arm, it would either require an increase in size of the would cantilever installation or not be suitable for several pantograph sizes.

### Brief description of the drawings

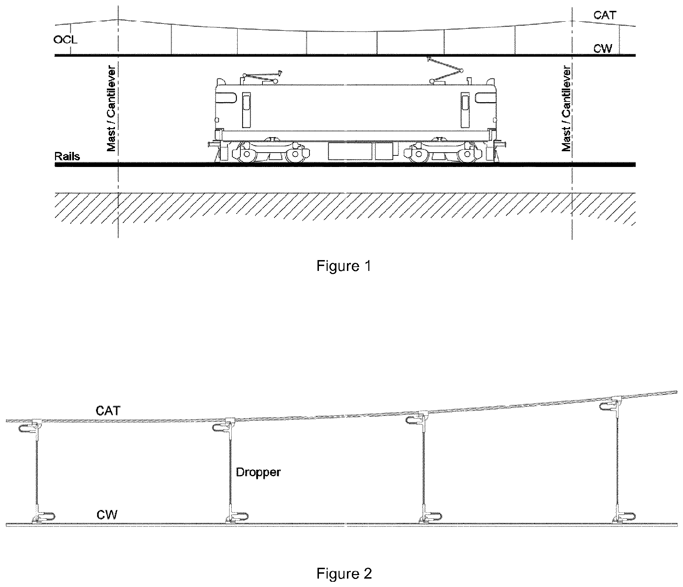

**Fig. 1** shows a simplified diagram of the electric traction system.
**Fig. 2** shows the catenary wire, contact wire and droppers of a traditional OCL.

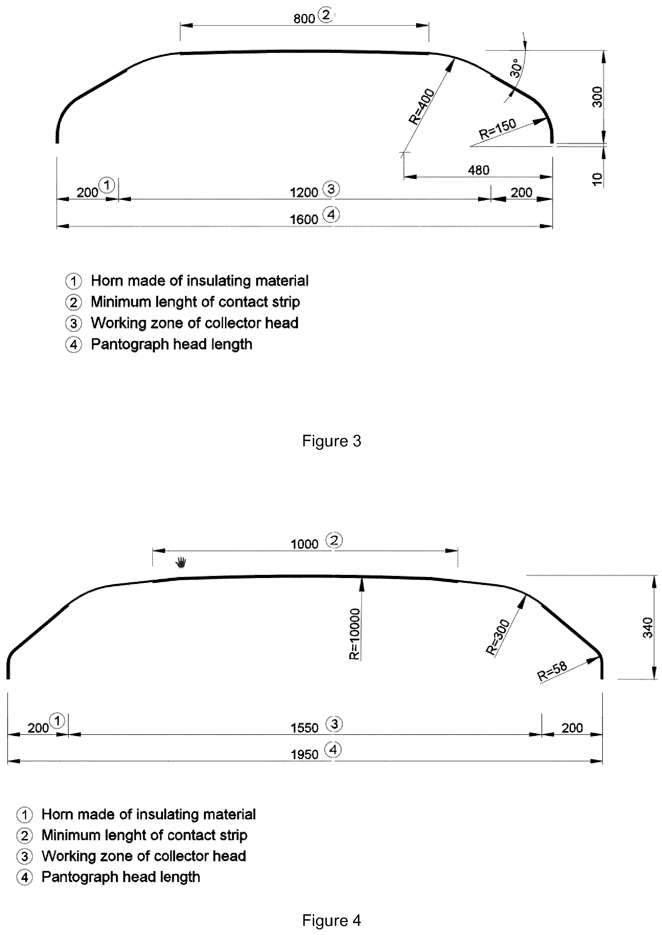

**Fig. 3** shows a schematic view of the 1600mm pantograph (EN 50367).
**Fig. 4** shows a schematic view of the 1950mm pantograph (EN 50367).

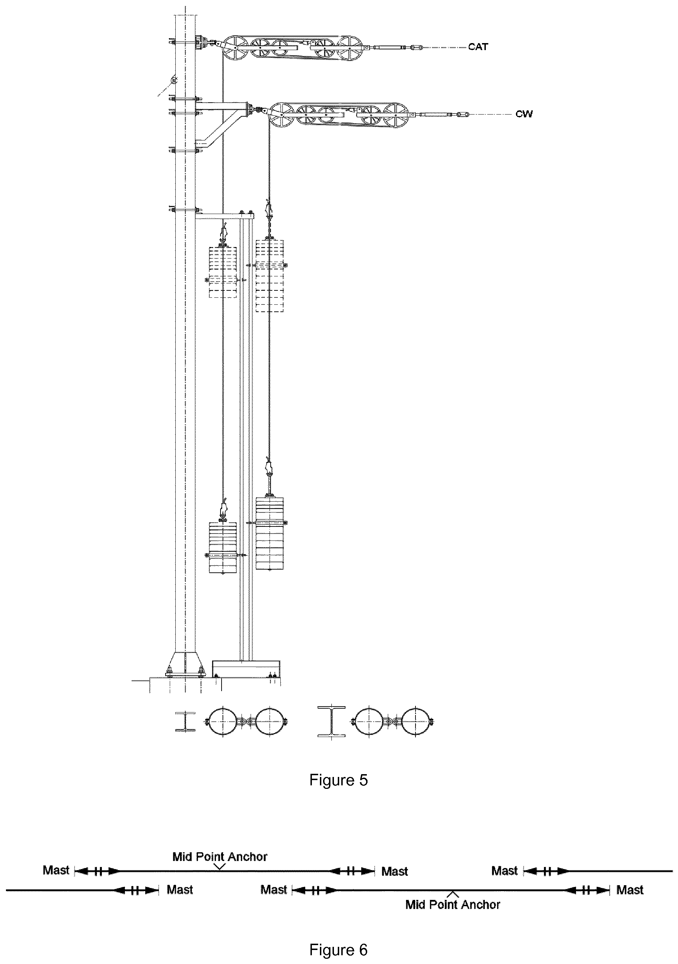

**Fig. 5** shows tensioning devices and the anchoring of the catenary wire and the contact wire to the mast of a high-speed OCL.
**Fig. 6** shows the OCL spans.

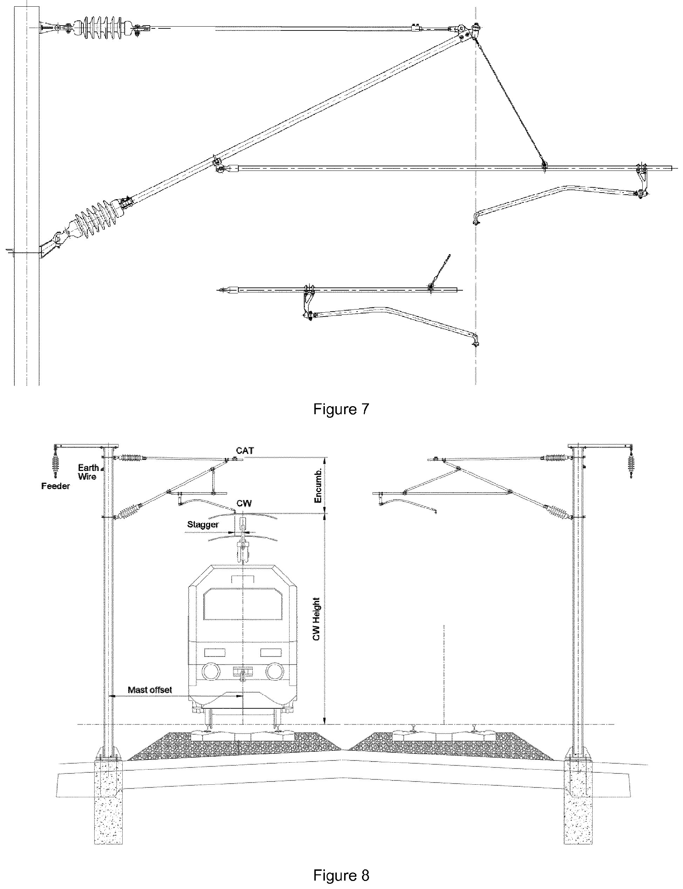

**Fig. 7** shows the parts of a traditional cantilever (Infraestruturas de Portugal).
**Fig. 8** shows the typical profile of a high-speed line.

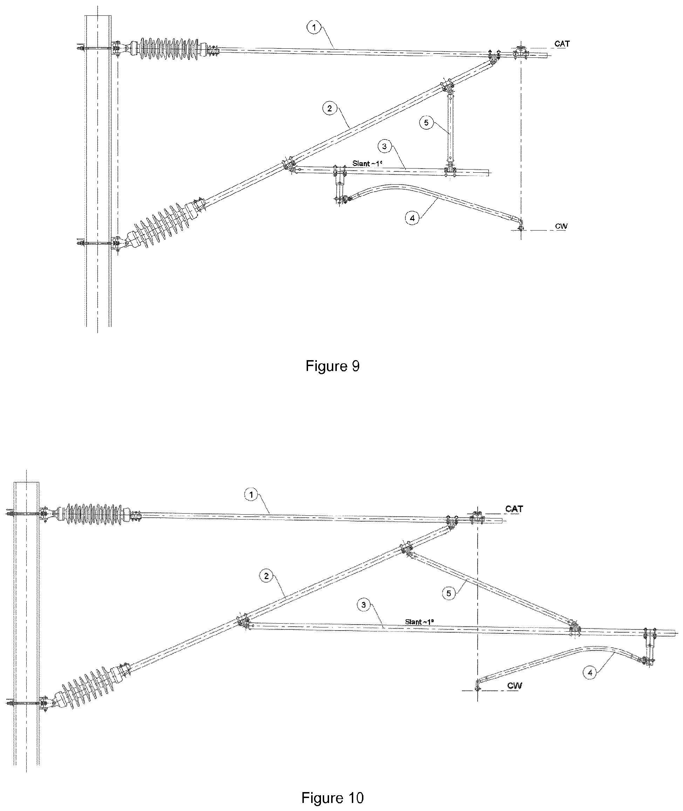

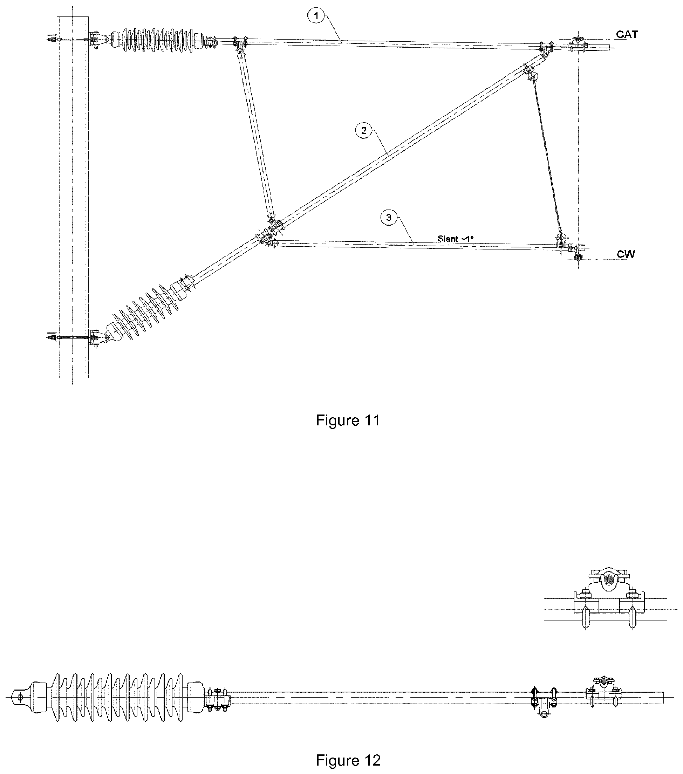

**Fig. 9, Fig. 10** and **Fig. 11** show the pull-off cantilever, push-off cantilever and a cantilever for raised contact wire, respectively. These are the subject of this patent request.
**Fig. 12** shows the cantilever top anchor.

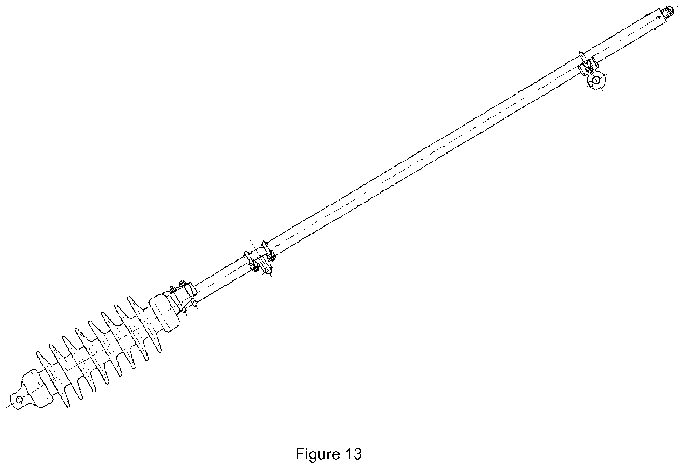

**Fig. 13** shows the cantilever tube.

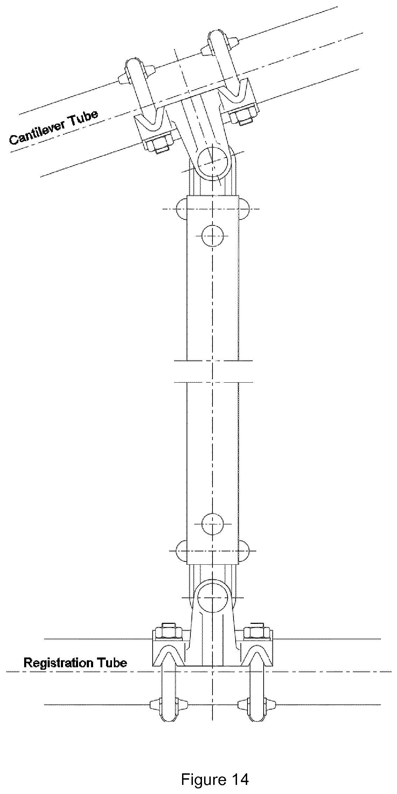

**Fig. 14** shows the registration tube strut.

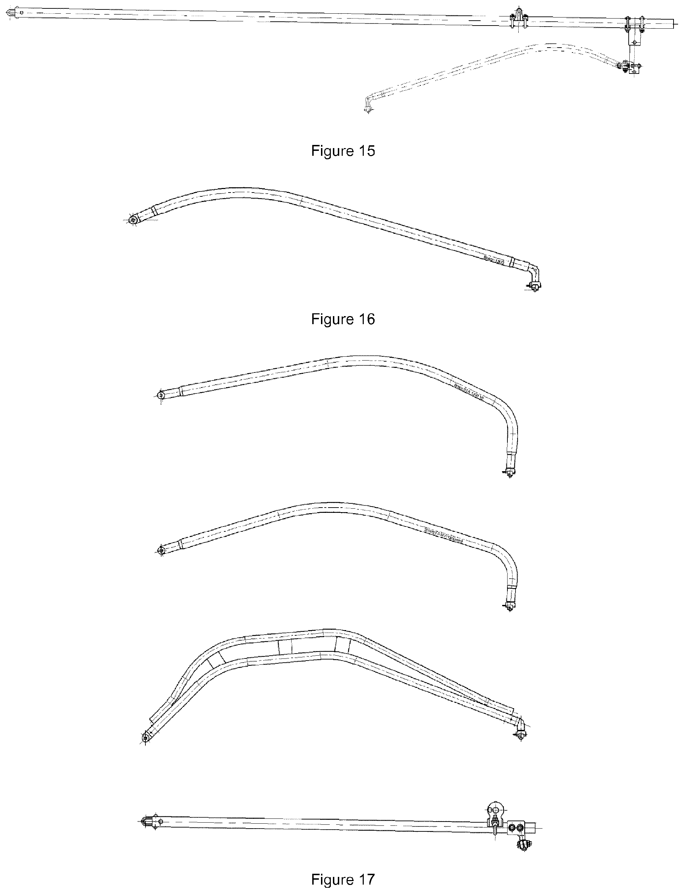

**Fig. 15** shows the registration tube.
**Fig. 16** shows the normal curved steady arm.
**Fig. 17** shows the set of other steady arms: insulated overlap, track switching devices and registration tube for raised contact wire.

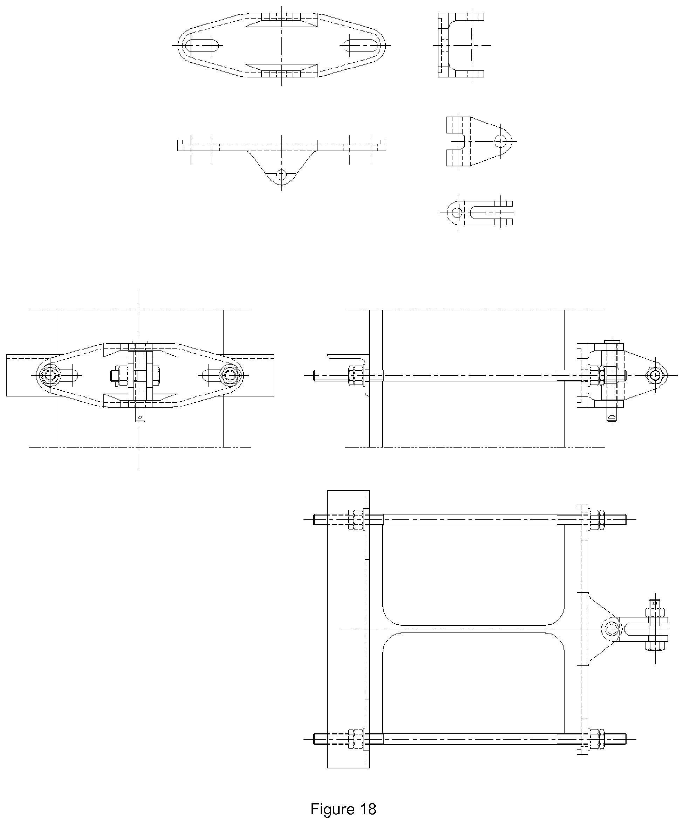

**Fig. 18** shows the clamp for the top anchor or cantilever tube and its swivel with clevis. This set of parts is used to attach the top anchor or the cantilever tube to the mast.

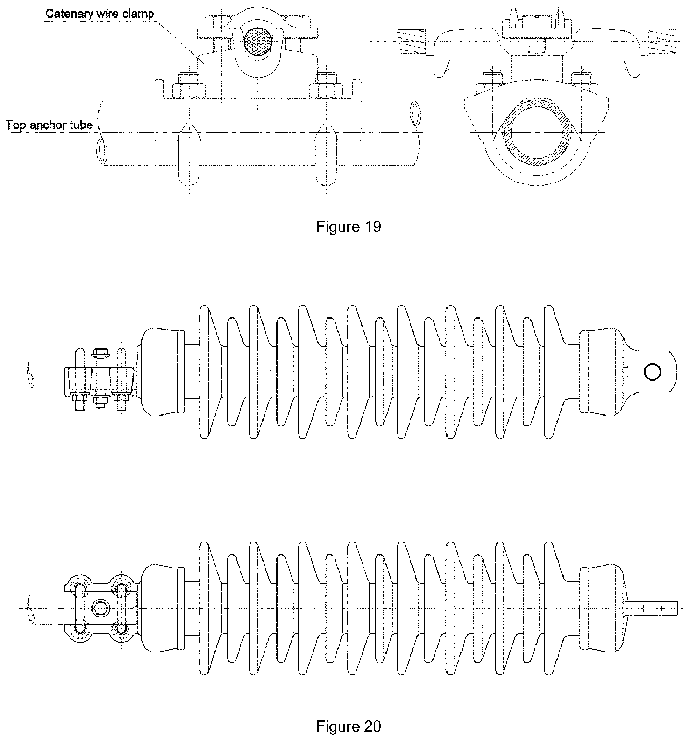

**Fig. 19** shows the tube clamp with the suspension clamp for the support cable on the cantilever.
**Fig. 20** shows the solid core ceramic insulator through which the top anchor connects to the attachment of this tube to the mast.

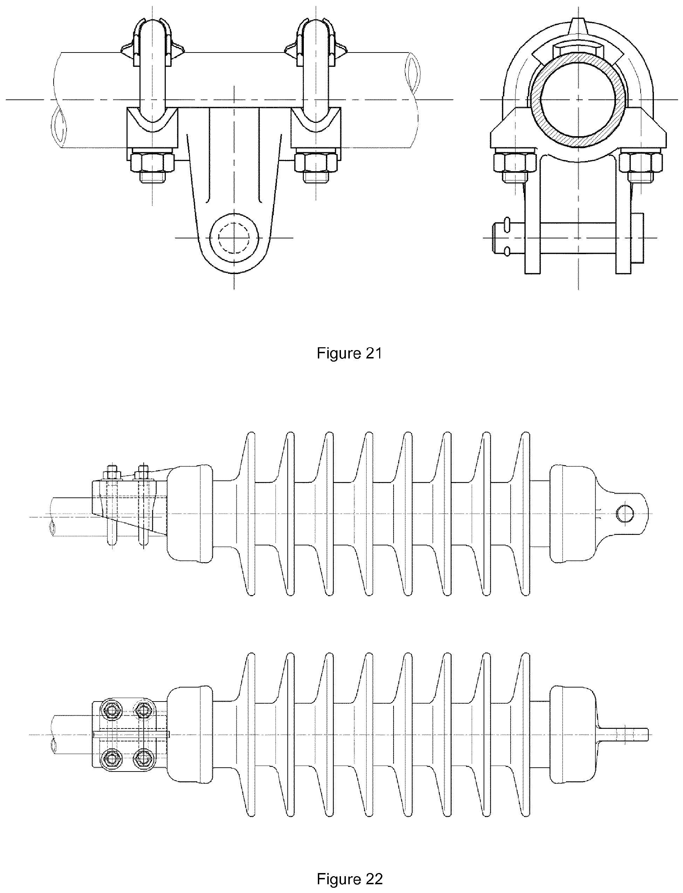

**Fig. 21** shows the top anchor clamp by means of which a tube can be connected to a cantilever tube or a registration arm strut.
**Fig. 22** shows the cantilever tube insulator that connects the cantilever tube to the attachment of this tube to the mast.

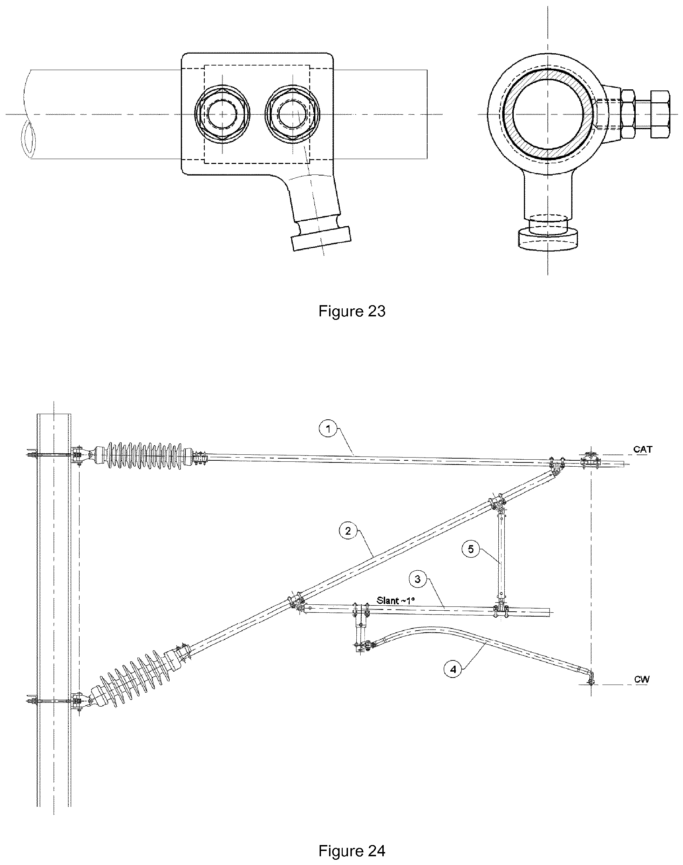

**Fig. 23** shows the clamp holder for the registration tube, where a raised contact wire connects to the registration tube.
**Fig. 24** shows the cantilever for supporting high-speed OCL.

### Description of the invention

In railway electric traction, the electrical power that drives the trains is carried from the power source (traction substation) over power lines that are generically known as Overhead Contact Line.

In the 25 kV - 50 Hz electric traction system, the OCL comprises a grooved contact wire (CW) and a catenary wire (CAT). The contact wire is suspended from the catenary wire by means of droppers, spaced out in accordance with specific rules.

The groove in the contact wire is designed to ensure that the droppers are installed in such a way that they don't come into contact with the pantograph (the device on the train that harnesses the electrical energy from the OCL).

The contact between the pantograph and the OCL should be as uninterrupted and perfect as possible, in order to avoid the mutually destructive electrical arcing that results from any discontinuity of contact between the pantograph and the OCL.

The variation in the sag of the contact wire is one of the factors that can cause this discontinuity, which will be greater the faster the train goes.

Thus, in order to prevent the wire sag from varying with the weather (it varies with temperature and wind), both the contact wire and the catenary wire are anchored by a tensioning device and counterweight system. This system maintains constant tensioning across a range of temperatures preselected as a function of the local climate and weather conditions.

This is why the OCL is suspended from masts using tilting cantilevers.

Thus, the OCL comprises limited length sections known as tensioning sections. Between the two automatically tensioned terminations of a tensioning section, the OCL will be immobilised by a mid-point anchor.

The non-insulated overlaps (NIO) are designed to provide a mechanical separation of the two OCL tensioning sections, without separating them electrically. These assemblies are crucial to OCL compensation, given the variations in temperature to be accommodated.

The insulated overlaps (IO) are designed to provide both an electrical and mechanical separation between two OCL tensioning sections.

Thus, the OCL comprises a series of tensioning sections, non-insulated overlaps and insulated overlaps.

The function of the cantilever is to support the weight of the OCL and ensure that the contact wire and the catenary wire have the necessary offset (stagger), that is, that they are sufficiently transversally apart with respect to the pantograph axis.

The 25 kV - 50 Hz system cantilevers are comprised of an insulated and approximately horizontal top anchor and an insulated and oblique cantilever tube that connect, on one side, to the mast and, on the other, to the catenary and contact wires.

The top anchor-cantilever tube-mast arrangement forms a triangle (only non-deformable jointed geometrical figure).

The catenary wire is attached at the joint between the top anchor and the cantilever tube or on the top anchor, somewhere near this joint.

The contact wire is attached to the cantilever tube through a steady arm that is connected to an essentially horizontal registration tube.

On some railways, the end of the steady arm to which the contact wire is attached is connected to the registration tube by copper cable, known as a windstay assembly.

Cantilevers may be mounted on masts or on portal structures.

On conventional lines, the conductors are subject to tensioning forces of around 1,000 kg or 1,200 kg (Infraestruturas de Portugal uses 1,000 kg for speeds up to 160 km/h and 1,200 kg for speeds over 220 km/h).

In the Portuguese high-speed (HS) system and for speeds of 300 km/h, the catenary wire will be tensioned at 1,400 kg and the contact wire at 2,000 kg. These tensioning forces have already been verified by simulations run on certified software.

As a result of these forces, high-speed cantilevers are more robust than conventional ones.

The OCL cantilever that is the subject of this invention comprises a top anchor (1), a cantilever tube (2), a registration tube (3), a steady arm (4) and a registration arm strut (5).

The top anchor (1) comprises a steel tube that is connected to the insulator at one end and to the cantilever tube at the other. The suspension clamp for the catenary wire is attached to the top anchor, independently of this bar's connection to the cantilever tube. This means that the catenary wire can be adjusted without any need to intervene in any of the other components, unlike in (Infraestruturas de Portugal) traditional OCL cantilevers.

The cantilever tube (2) comprises a steel tube that is connected at one end to the cantilever insulator and to the cantilever top anchor at the other.

There is a part connecting the cantilever tube to the registration tube. This comprises a steel tube that replaces the windstay assembly that connected the steady arm to the registration tube on traditional cantilevers. This new arrangement leaves the steady arm freer to move with the pantograph.

The registration tube (3) comprises a steel tube that is connected at one end to the cantilever tube, as stated above. It is also connected to the same tube by means of a rigid steel tube attachment.

The steady arm (4) is curved and is made of aluminium alloy. This steady arm, longer than those normally used on high-speed catenaries, makes it possible to simultaneously run trains equipped with the interoperable 1950 mm and 1600 mm pantographs and also all other smaller pantographs.

This new curved steady arm, developed specifically for this cantilever, means that both 1950 mm and 1600 mm pantographs can be registered, on both straight and curved track, without any need to adjust the arm's position to accommodate track cant. The arm minimises the vertical distance between the position of the contact wire and the steady arm joint.

Curved, rather than straight, arms mean that the OCL can have the same uplift in less space. This, in turn, means tighter OCL mast-track offset (distance between the mast and the track axis) and, consequently, greater flexibility in designing electrification projects for new or existing lines.

The registration tube-steady arm arrangement allows the contact wire on the cantilever to achieve uplifts of 240 mm, which is sufficient for real uplifts of 120 mm. Under the abovementioned simulations, such uplifts were not achieved.

The cantilever assumes that the catenary wire is mounted vertically to the contact wire which makes this a vertical type OCL.

Unlike the traditional OCL, the vertical axis of tilt is perfectly defined.

The cantilever insulators are made of solid core porcelain. Synthetic insulators will be mounted on the cantilevers in passenger stations.

For the high-speed cantilever unit, the catenary wire is attached to the cantilever top anchor (and above it) independently of the connection between the top anchor and the cantilever tube.

The objective of this arrangement is to minimise the work involved in adjusting the position of the catenary wire with respect to the track, both during initial installation and, mainly, during OCL maintenance operations.

In effect, this innovation greatly simplifies, speeds up and increases the efficacy of both installation and maintenance, as the adjustment of the catenary wire will now only involve working on a single part and not on any other part of the cantilever.

The top anchor (1), cantilever tube (2) and the registration tube (3) are all made of hot-galvanised seamless steel tubes.

As the tubes are smooth, they have a longer lifetime and there are tubes as old as 50 years on the Portuguese railway network that have not yet needed refurbishing.

Aluminium is not deemed to be a suitable material for the cantilevers because it is more expensive and because it often requires an additional tube between the top anchor and the cantilever, given aluminium's lower bending strength when compared to steel.

The aluminium is not expected to outlast the steel (although it has not yet been in place for the 50 years required to confirm this increased useful lifetime).

It is also known that aluminium suffers from corrosion in areas that are subject to sea winds (due to the salinity).

It is difficult to obtain perfect galvanization in connecting parts between tubes that have projections or hollows (as is evidenced by 50 years of experience on the Portuguese railway system).

Thus, these tube connecting parts have been made of copper alloys.

On the basis of the abovementioned 50 years of experience, cantilever insulation will continue to be provided by solid core ceramic insulators.

In stations and near railway overhead crossings, this insulation will be synthetic, in the first case for aesthetic reasons and, in the second, to discourage vandalism.

The windstay assembly, which, in traditional OCL and some European high-speed networks, connects the steady arm to the registration tube, has been replaced by a registration tube strut to the cantilever tube. This performs the same function as the previous device but also leaves the steady arm freer for the vertical movements required by the pantograph.

In fact, the use of a rigid bar, jointed at both ends, to connect the cantilever tube and the registration tube prevents the wind from making the latter move parallel to the track, dragging the steady arm with it. If this prevention is not achieved, the required stagger cannot be guaranteed.

The masts continue to be made of hot-galvanised HE beams, once again because of the satisfactory experience that the Portuguese railways have had with this type of mast.

Unlike the traditional cantilever, this cantilever was designed so that the rotating axis of the top anchor and the cantilever tube is the same, which means that the cantilever can tilt, without limitation, as required by the tensioning devices.

Thus, the Portuguese high speed cantilever represents an innovation when compared to its counterparts.

## Claims

1. - High-speed Overhead Contact Line, OCL, cantilever support **characterised by** being comprised of:
a) a top anchor (1) comprising a first steel tube, an end of which is connectable to an insulator;
b) a cantilever tube (2) which is connected to the top anchor (1) by means of an other end of the first steel tube;
c) a registration tube (3);
d) a steady arm (4) having a steady arm joint;
e) a registration tube strut (5) connecting the registration tube (3) to the cantilever tube (2), thereby providing that the steady arm (4) is freer to vertically move with a pantograph, wherein the steady arm (4) is a curved steady arm (4)
caracterized in that the curved steady arm is capable of operating in an interoperable manner with 1950 mm and 1600 mm pantographs as well as with smaller-sized pantographs, and that the curved steady arm (4) is adapted to minimise the vertical distance between a position of a contact wire and the steady arm joint.

2. - High-speed OCL cantilever support in accordance with claim 1 and **characterised by** the attachment of the catenary wire to the cantilever top anchor (1) being independent of the connection between the top anchor and the cantilever tube.

3. - High-speed OCL cantilever support in accordance with claim 1 and **characterised by** having a registration tube strut (5) rather than the anti-wind assembly.

4. - High-speed OCL cantilever support in accordance with claim 1 and **characterised by** having parts cast in copper alloy in the connections between the tubes.

5. - High-speed OCL cantilever support in accordance with claim 1 and **characterised by** having galvanised steel tubes.

6. - High-speed OCL cantilever support in accordance with claim 1 and **characterised by** having solid core ceramic insulators in the connection between the cantilever and the mast.

## Patentansprüche

1. - Hochgeschwindigkeits-Oberleitung, Overhead Contact Line-OCL, Auslegerstütze, **dadurch gekennzeichnet, dass** er Folgendes umfasst:
a) einem oberen Anker (1) mit einem ersten Stahlrohr, dessen eines Ende mit einem Isolator verbunden werden kann;
b) einem Auslegerrohr (2), das mit dem oberen Anker (1) mittels eines anderen Endes des ersten Stahlrohrs verbunden ist;
c) ein Eintragungsrohr (3);
d) einen Seitenhalter (4) mit einem Seitenhaltergelenk;
e) eine Eintragungsrohrstrebe (5), die das Eintragungsrohr (3) mit dem Auslegerrohr (2) verbindet, wodurch der Seitenhalter (4) freier ist, sich vertikal mit einem Stromabnehmer zu bewegen,
wobei der Seitenhalter (4) ein gekrümmter Seitenhalter (4) ist, **dadurch gekennzeichnet, dass** der gekrümmte Seitenhalter in der Lage ist, in einer interoperablen Weise mit 1950 mm und 1600 mm Stromabnehmern sowie mit Stromabnehmern kleinerer Größe zu arbeiten, und dass der gekrümmte Seitenhalter (4) angepasst ist, um den vertikalen Abstand zwischen einer Position eines Fahrdrahtes und dem Seitenhaltergelenk zu minimieren.

2. - Hochgeschwindigkeits-OCL Auslegerstütze nach Anspruch 1, **dadurch gekennzeichnet, dass** die Befestigung der Kettenfahrleitung am oberen Anker (1) des Auslegers unabhängig von der Verbindung zwischen dem oberen Anker und dem Auslegerrohr ist.

3. - Hochgeschwindigkeits-OCL Auslegerstütze nach Anspruch 1, **dadurch gekennzeichnet, dass** sie anstelle der Anti-Wind-Baugruppe eine Eintragungsrohrstrebe (5) aufweist.

4. - Hochgeschwindigkeits-OCL Auslegerstütze nach Anspruch 1, **dadurch gekennzeichnet, dass** die Verbindungen zwischen den Rohren Teile aus einer Kupferlegierung aufweisen.

5. - Hochgeschwindigkeits-OCL Auslegerstütze nach Anspruch 1, **dadurch gekennzeichnet, dass** sie verzinkte Stahlrohre aufweist.

6. - Hochgeschwindigkeits-OCL Auslegerstütze nach Anspruch 1, **dadurch gekennzeichnet, dass** die Verbindung zwischen dem Ausleger und dem Mast mit Keramikisolatoren mit festem Kern versehen ist.

## Revendications

1. - Support cantilever de ligne aérienne de contact, Overhead Contact Line-OCL, à grande vitesse, **caractérisé en ce qu'**il comprend :
a) un ancrage supérieur (1) comprenant un premier tube en acier, dont une extrémité peut être reliée à un isolateur ;
b) un tube cantilever (2) qui est relié à l'ancrage supérieur (1) au moyen d'une autre extrémité du premier tube en acier ;
c) un tube d'enregistrement (3) ;
d) un bras de rappel (4) comportant une articulation de bras de rappel ;
e) une entretoise de tube d'enregistrement (5) reliant le tube d'enregistrement (3) au tube cantilever (2), permettant ainsi au bras de rappel (4) de se déplacer plus librement verticalement avec un pantographe,
dans lequel le bras de rappel (4) est un bras de rappel courbé (4) **caractérisé en ce que** le bras de rappel courbé est capable de fonctionner de manière interopérable avec des pantographes de 1950 mm et 1600 mm ainsi qu'avec des pantographes de plus petite taille, et **en ce que** le bras de rappel courbé (4) est adapté pour minimiser la distance verticale entre une position d'un fil de contact et l'articulation du bras de rappel .

2. - Support cantilever d' OCL à grande vitesse selon la revendication 1, **caractérisé en ce que** la fixation du fil de caténaire à l'ancrage supérieur (1) du cantilever est indépendante de la connexion entre l'ancrage supérieur et le tube cantilever.

3. - Support cantilever d' OCL à grande vitesse selon la revendication 1, **caractérisé en ce qu'**il comporte une entretoise de tube d'enregistrement (5) plutôt qu'un ensemble anti-vent.

4. - Support cantilever d' OCL à grande vitesse selon la revendication 1, **caractérisé par** la présence de pièces moulées en alliage de cuivre dans les connexions entre les tubes.

5. - Support cantilever d' OCL à grande vitesse selon la revendication 1, **caractérisé en ce qu'**il comporte des tubes en acier galvanisé.

6. - Support cantilever d' OCL à grande vitesse selon la revendication 1, **caractérisé en ce qu'**il comporte des isolateurs céramiques à âme pleine dans la connexion entre le cantilever et le mât.
